# FASCICULE DE BREVET EUROPEEN

(11) **EP 3 295 010 B1**
(45) Date de publication et mention de la délivrance du brevet: **03.07.2019**
(21) Numéro de dépôt: 16731208.1
(22) Date de dépôt: 13.05.2016
(51) Int. Cl.: F02K 3/075, F02C 9/18

(54) **MOYEU DE CARTER INTERMÉDIAIRE POUR TURBORÉACTEUR D'AÉRONEF COMPORTANT UN CONDUIT DE DÉCHARGE COMPOSITE**
ZWISCHENGEHÄUSENABE FÜR EIN FLUGZEUGTURBODÜSENTRIEBWERK MIT EINEM VERBUNDAUSLASSROHR
INTERMEDIATE CASING HUB FOR AN AIRCRAFT TURBOJET ENGINE INCLUDING A COMPOSITE OUTLET PIPE

(30) Priorité: 15.05.2015 FR 1554378
(43) Date de publication de la demande: 21.03.2018
(73) Titulaire: Safran Aircraft Engines, 75015 Paris (FR); SAFRAN, 75015 Paris (FR)
(72) Inventeur: LACROIX, Florian, Benjamin, Kévin, 77550 Moissy-Cramayel (FR); MATHIAS, Cyrille, François, Antoine, 77550 Moissy-Cramayel (FR); TEXIER, Idaline, Françoise, Chantal, 77550 Moissy-Cramayel (FR); BLAISE, Maxime, Marie, Désirée, 77550 Moissy-Cramayel (FR)
(74) Mandataire: Brevalex
(86) Numéro de dépôt international: PCT/FR2016/051134
(87) Numéro de publication internationale: WO 2016/185119

(56) Documents cités:
- EP-A2- 1 854 989
- EP-A2- 2 383 453
- FR-A1- 2 961 251
- FR-A1- 3 012 846

## Description

### DOMAINE TECHNIQUE

La présente invention se rapporte au domaine des turboréacteurs d'aéronef, et plus particulièrement au domaine général des turboréacteurs double corps et double flux.

L'invention concerne ainsi un moyeu de carter intermédiaire pour turboréacteur d'aéronef, en particulier du type comprenant au moins deux corps mécaniquement indépendants.

Dans un turboréacteur à double corps, on désigne habituellement par « carter intermédiaire », un carter dont le moyeu est sensiblement agencé entre un carter de compresseur basse pression et un carter de compresseur haute pression.

La présente invention se rapporte plus particulièrement à un moyeu de carter intermédiaire du type comprenant des vannes de décharge (encore désignées par l'acronyme anglais VBV pour « Variable Bleed Valves »).

Les vannes de décharge sont destinées à réguler le débit en entrée du compresseur haute pression, afin notamment de limiter les risques de pompage du compresseur basse pression, en permettant l'évacuation d'une partie de l'air hors de l'espace annulaire d'écoulement du flux primaire.

De plus, en cas de pénétration accidentelle dans cet espace d'écoulement, d'eau, notamment sous forme de pluie ou de grêle, ou encore de débris divers, qui sont susceptibles de nuire au fonctionnement du turboréacteur, ces vannes de décharge permettent de récupérer cette eau ou ces débris qui sont centrifugés dans l'espace d'écoulement précité et de les éjecter vers l'extérieur de ce dernier.

Dans le cas des turboréacteurs à double flux, ces vannes de décharge sont ainsi configurées pour permettre le passage d'air, d'eau ou de débris de l'espace d'écoulement du flux primaire vers un espace annulaire d'écoulement d'un flux secondaire. Pour ce faire, les vannes de décharge comportent notamment des conduits de décharge du flux primaire vers le flux secondaire raccordant des orifices communiquant respectivement avec le flux primaire et le flux secondaire.

Ainsi, de façon plus précise, l'invention concerne un moyeu de carter intermédiaire pour turboréacteur d'aéronef comportant un joint d'étanchéité à l'air et au feu au niveau d'un conduit de décharge pourvu d'une paroi composite drapée d'une pluralité de plis imprégnés de résine, un carter intermédiaire comportant un tel moyeu, ainsi qu'un turboréacteur d'aéronef comportant un tel carter intermédiaire.

### ÉTAT DE LA TECHNIQUE

Dans le domaine des turboréacteurs d'aéronef, l'utilisation de matériaux composites devient de plus en plus fréquente. En particulier, de nombreuses pièces aéronautiques sont désormais réalisées, au moins en partie, à partir de matériaux composites à matrice organique (désignés généralement par l'acronyme CMO pour « Composite à Matrice Organique »).

Ainsi, il peut être envisagé de réaliser les conduits de décharge, qui équipent les vannes de décharge précédemment décrites d'un moyeu de carter intermédiaire pour turboréacteur d'aéronef, à partir de matériaux composites, et notamment des composites à matrice organique (CMO).

Cependant, les matériaux composites sont tout particulièrement sensibles au risque de feu, et notamment les composites à matrice organique (CMO) car la résine organique formant la matrice est combustible. Pourtant, ces matériaux composites sont souvent utilisés dans des équipements de turboréacteur situés dans des zones à risque de feu.

En particulier, les conduits de décharge des vannes de décharge sont typiquement situés dans une zone à risque de feu, à savoir la zone inter veines du turboréacteur, de sorte qu'il soit nécessaire d'empêcher toute alimentation en air frais d'un feu contenu dans cette zone.

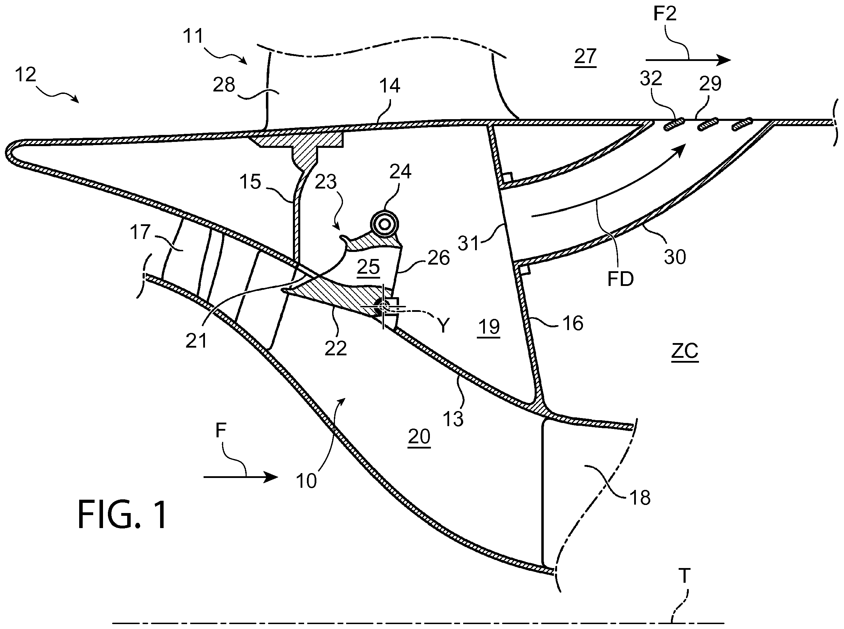

A titre d'illustration du contexte technique de l'invention, la figure 1 représente partiellement, en coupe axiale, un exemple de moyeu 10 d'un carter intermédiaire 11 pour un turboréacteur 12 d'aéronef à double corps et double flux d'un type connu, tel que décrit par exemple dans le document FR3012846.

Le moyeu 10 du carter intermédiaire 11 comporte habituellement deux viroles annulaires coaxiales, respectivement interne 13 et externe 14, reliées mutuellement par deux flasques transversaux, à savoir un flasque transversal amont 15 et un flasque transversal aval 16.

Le flasque transversal amont 15 est agencé en aval d'un compresseur basse pression 17 du turboréacteur 12, tandis que le flasque transversal aval 16 est agencé en amont d'un compresseur haute pression 18 de ce turboréacteur 12. Ce compresseur haute pression 18 comprend généralement une succession de rotors et de stators à calage variable, permettant de contrôler le débit de l'air le traversant.

Par ailleurs, entre les viroles interne 13 et externe 14, et entre les flasques transversaux amont 15 et aval 16, sont ménagés des espaces intermédiaires 19 répartis autour de l'axe du moyeu 10, confondu avec l'axe de rotation T du turboréacteur 12. Les espaces intermédiaires 19 sont à l'amont d'une zone inter veines ZC.

De plus, la virole interne 13 délimite un espace annulaire d'écoulement primaire 20 d'un flux primaire du turboréacteur 12. Par ailleurs, la virole interne 13 comporte des orifices de passage d'air 21, appelés orifices primaires dans ce qui suit, dont chacun est obturé par le clapet pivotant 22 d'une vanne de décharge 23 correspondante, destinée à la régulation du débit du compresseur haute pression 18, et le cas échéant, à l'évacuation d'air, d'eau ou de débris comme expliqué auparavant.

Une telle vanne de décharge 23 prend habituellement la forme d'une porte 24, qui comporte le clapet pivotant 22 à son extrémité radialement interne et qui est montée pivotante autour d'un axe Y de sorte qu'en position de fermeture des orifices primaires 21, le clapet 22 prolonge la virole interne 13 du carter intermédiaire 11 de manière sensiblement continue pour réduire au mieux les risques de perturbations aérodynamiques du flux primaire par ce clapet 22, et qu'en position d'ouverture desdits orifices primaires 21, le clapet 22 fasse saillie radialement vers l'intérieur par rapport à la virole interne 13 et forme ainsi une écope de prélèvement d'une partie du flux primaire dans l'espace 20. La porte 24 comporte un conduit 25 par lequel de l'air écope transite, ce conduit 25 se terminant en aval sur un orifice de sortie 26 débouchant dans l'espace intermédiaire correspondant 19. La demande de brevet FR 2 961251 A1 de la Demanderesse décrit encore un autre exemple de vanne de décharge d'un moyeu de carter intermédiaire de turboréacteur d'aéronef.

Par ailleurs, la virole externe 14 délimite un espace annulaire d'écoulement secondaire 27 d'un flux secondaire F2 du turboréacteur 12, et est raccordée à des bras structuraux 28, relativement écartés les uns des autres, traversant cet espace 27. De plus, la virole externe 14 comporte des orifices de passage d'air 29, appelés orifices secondaires dans ce qui suit, et agencés en aval du flasque transversal aval 16. Autrement dit, dans cet exemple de la figure 1, l'évacuation de l'air, de l'eau ou des débris se fait au travers de la virole externe 14.

Toutefois, en variante (non représentée), lorsque par exemple la virole externe 14 porte des aubes directrices relativement proches les unes des autres, celles-ci gênent l'évacuation précitée au travers de la virole externe 14. Dans ce cas, il peut être souhaitable de permettre cette évacuation plus en aval, au travers de la paroi annulaire d'une extension du moyeu du carter intermédiaire, c'est-à-dire la paroi annulaire d'une pièce structurale qui est parfois utilisée pour supporter à son extrémité aval des éléments d'inverseurs de poussée tels que des panneaux de carénage.

Lorsque les stators à calage variable du compresseur haute pression 18 sont dans une position réduisant le débit d'air entrant dans ce compresseur, un surplus d'air dans l'espace d'écoulement secondaire peut alors être évacué par les orifices secondaires 29, évitant ainsi des phénomènes de pompage pouvant conduire à une détérioration, voire une destruction complète, du compresseur basse pression 17.

En outre, comme expliqué précédemment, des conduits de décharge 30 s'étendent chacun entre un orifice d'entrée 31 respectif débouchant dans l'espace intermédiaire 19 et un orifice secondaire 29 correspondant. A l'intérieur de ces conduits de décharge 30 circule un flux de décharge FD, issu du flux primaire, en direction du flux secondaire F2. L'orifice d'entrée 31 est généralement agencé au raz de la surface du flasque transversal aval 16 donnant sur l'espace intermédiaire 19. L'orifice secondaire 29 comporte quant à lui une grille de contrôle 32, fixée au conduit de décharge 30 à sa sortie, pour pouvoir contrôler le flux de décharge FD lors de son rejet dans le flux secondaire F2.

Dans chaque espace intermédiaire 19, l'orifice de sortie 26 du conduit primaire 25 et l'orifice d'entrée 31 du conduit de décharge 30 sont agencés en vis-à-vis.

Chaque porte 24, l'espace intermédiaire 19 et le conduit de décharge 30 en aval correspondants forment ainsi ensemble un système d'évacuation d'air, d'eau ou de débris, désigné globalement par l'expression « vanne de décharge », depuis l'espace d'écoulement primaire 20 vers l'espace d'écoulement secondaire 27. Le moyeu 11 comporte donc une pluralité de tels systèmes répartis autour de son axe T.

Lorsqu'une porte 24 est en position ouverte, un flux d'air écopé par celle-ci traverse le conduit primaire 25, débouche dans l'espace intermédiaire 19 par son orifice de sortie 26, pénètre dans le conduit de décharge 30 correspondant jusqu'à atteindre l'espace d'écoulement secondaire 27.

Comme on peut le voir sur la figure 1, les conduits de décharge 30 sont fixés d'une part à la virole externe 14, notamment par des vis, et d'autre part au flasque transversal aval 16. Ils sont situés dans une zone inter veine ZC du turboréacteur 12 qui présente un risque de feu, comme indiqué précédemment. Une telle zone inter veines est couramment qualifiée de « zone core » en utilisant une terminologie anglo-saxonne.

Il s'avère ainsi nécessaire de prévoir une solution permettant d'éviter toute alimentation en air frais de la zone inter veines ZC du turboréacteur 12, provenant du flux primaire ou du flux secondaire.

### EXPOSÉ DE L'INVENTION

Par conséquent, il existe un besoin pour proposer une solution permettant d'améliorer la fiabilité et l'efficacité de l'utilisation d'un conduit de décharge de vanne de décharge d'un moyeu de carter intermédiaire de turboréacteur d'aéronef, réalisé en un ou plusieurs matériaux composites, dans une zone du turboréacteur présentant un risque de feu. En particulier, il existe un besoin pour concevoir une ou plusieurs interfaces du conduit de décharge en composite avec une ou plusieurs pièces de son environnement, par exemple une virole externe, qui soient résistantes au feu, notamment étanches au feu selon la norme ISO 2685. De plus, il existe un besoin pour assurer une telle étanchéité à l'air d'une interface de conduite de décharge avec son environnement, même en l'absence de feu, pour pouvoir améliorer les performances du turboréacteur.

L'invention a ainsi pour but de remédier au moins partiellement aux besoins mentionnés ci-dessus et aux inconvénients relatifs aux réalisations de l'art antérieur.

L'invention a ainsi pour objet, selon l'un de ses aspects, un moyeu de carter intermédiaire pour turboréacteur d'aéronef, comportant :
- une virole annulaire interne destinée à délimiter d'une part extérieurement un espace d'écoulement primaire d'un flux de gaz primaire dans le turboréacteur, et d'autre part intérieurement l'amont d'au moins une zone inter veines, la virole annulaire interne étant pourvue d'au moins un orifice primaire de passage d'air,
- une virole annulaire externe destinée à délimiter d'une part intérieurement un espace d'écoulement secondaire d'un flux de gaz secondaire dans le turboréacteur, et d'autre part extérieurement ladite au moins une zone inter veines, la virole annulaire externe étant pourvue d'au moins un orifice secondaire de passage d'air,
- au moins une vanne de décharge, comprenant au moins une porte mobile apte à prélever, depuis ledit au moins un orifice primaire, de l'air circulant dans l'espace d'écoulement primaire et à renvoyer vers ladite au moins une zone inter veines l'air ainsi prélevé en direction d'au moins un orifice correspondant d'entrée de décharge d' au moins un conduit de décharge du moyeu de carter intermédiaire conformé pour assurer un passage d'air depuis ledit au moins un orifice d'entrée de décharge vers ledit au moins un orifice secondaire pour renvoyer l'air prélevé via ladite au moins une vanne de décharge dans l'espace d'écoulement secondaire,
ledit au moins un conduit de décharge étant fixé à la virole annulaire externe au niveau dudit au moins un orifice secondaire,
caractérisé en ce que au moins un joint d'étanchéité à l'air et au feu est disposé entre ledit au moins un conduit de décharge et la virole annulaire externe,
et en ce que ledit au moins un conduit de décharge est en matériau composite et comporte une paroi composite drapée, constituée d'une pluralité de plis imprégnés de résine.

Grâce à l'invention, il est possible d'assurer l'étanchéité requise au feu et à l'air de l'interface entre un conduit de décharge d'un moyeu de carter intermédiaire de turboréacteur d'aéronef et la virole externe du moyeu par le biais du bon comportement au feu du conduit de décharge en matériau composite et de l'utilisation du joint d'étanchéité résistant au feu. En particulier, l'invention propose une solution impliquant une résistance mécanique suffisante en cas de risque de feu et remplissant les conditions requises par la norme ISO 2685. De plus, le principe selon l'invention permet d'éviter le recours à l'utilisation d'une protection du type métallique. En effet, les fonctions d'étanchéité à l'air et au feu sont assurées par la présence du joint d'étanchéité et de la réalisation en empilement de plis imprégnés du conduit de décharge en matériau composite. Ainsi, l'invention permet d'obtenir un gain significatif en termes de masse, autorisant la réduction du nombre de pièces nécessaires pour assurer les fonctions d'étanchéité et de résistance au feu. Par ailleurs, l'invention peut permettre d'envisager la fourniture d'une interface entre conduit de décharge et virole externe qui soit prête à être montée.

Le moyeu de carter intermédiaire selon l'invention peut en outre comporter l'une ou plusieurs des caractéristiques suivantes prises isolément ou suivant toutes combinaisons techniques possibles.

Le moyeu de carter intermédiaire peut notamment comporter un flasque transversal aval, reliant les viroles annulaires interne et externe, délimitant en amont au moins un espace intermédiaire et en aval ladite au moins une zone inter veines, le flasque transversal aval comprenant ledit au moins un orifice d'entrée de décharge. L'air circulant dans l'espace d'écoulement primaire, prélevé depuis ledit au moins un orifice primaire, par ladite au moins une porte mobile peut être apte à être renvoyé dans ledit au moins un espace intermédiaire en direction dudit au moins un orifice d'entrée de décharge, ladite au moins une vanne de décharge comprenant ledit au moins un conduit de décharge, situé dans ladite au moins une zone inter veines et reliant ledit au moins un orifice d'entrée de décharge et ledit au moins un orifice secondaire, l'air prélevé pouvant circuler dans ledit au moins un espace intermédiaire et être renvoyé dans l'espace d'écoulement secondaire.

Ledit au moins un joint d'étanchéité à l'air et au feu peut tout particulièrement être réalisé, au moins en partie, en silicone.

Ledit au moins un joint d'étanchéité à l'air et au feu peut être composé d'une superposition de différents plis de tissus, notamment de verre et/ou de céramique.

La virole annulaire externe peut ou non comporter un bossage annulaire. De même, ledit au moins un conduit de décharge peut ou non comporter un soyage annulaire.

Lorsque la virole annulaire externe comporte un bossage annulaire et que ledit au moins un conduit de décharge comporte un soyage annulaire, la fixation dudit au moins un conduit de décharge à la virole annulaire externe peut être réalisée par l'intermédiaire du bossage annulaire et du soyage annulaire, notamment par le biais d'un vissage au travers du bossage annulaire et du soyage annulaire.

Le bossage annulaire peut s'étendre totalement ou partiellement autour dudit au moins un joint d'étanchéité à l'air et au feu. De même, le soyage annulaire peut s'étendre totalement ou partiellement autour dudit au moins un joint d'étanchéité à l'air et au feu. De préférence, l'ensemble formé par le bossage annulaire et le soyage annulaire peut s'étendre tout autour dudit au moins un joint d'étanchéité à l'air et au feu, formant une séparation entre ledit au moins un joint d'étanchéité et ladite au moins une zone inter veines.

En variante, ledit au moins un conduit de décharge peut comporter un soyage annulaire partiel, s'étendant sur au moins deux bords opposés dudit au moins un conduit de décharge, notamment des bords amont et aval, la fixation dudit au moins un conduit de décharge à la virole annulaire externe étant réalisée par l'intermédiaire du soyage annulaire partiel, notamment par le biais d'un vissage au travers du soyage annulaire partiel permettant de surélever ladite paroi composite, ledit au moins un joint d'étanchéité étant logé entre ladite paroi composite et la virole annulaire externe. Alors, la virole annulaire externe peut être dépourvue de bossage annulaire.

Par ailleurs, une grille de contrôle peut être disposée au niveau dudit au moins un orifice secondaire. Ledit au moins un joint d'étanchéité à l'air et au feu peut être disposé tout autour de la grille de contrôle, la grille de contrôle étant fixée audit au moins un conduit de décharge, notamment par le biais d'un vissage.

De plus, ledit au moins un joint d'étanchéité à l'air et au feu peut être situé entre la grille de contrôle et l'ensemble formé par le bossage annulaire et le soyage annulaire.

Par ailleurs, l'épaisseur dudit au moins un conduit de décharge et/ou le nombre de plis imprégnés dudit au moins un conduit de décharge peuvent être choisis notamment en fonction du ou des matériaux composites et/ou de l'architecture dudit au moins un conduit de décharge. Cette épaisseur et/ou ce nombre de plis imprégnés sont préférentiellement suffisants pour permettre d'assurer la fonction de barrière contre le feu. Ainsi, par exemple, ledit au moins un conduit de décharge peut comporter une paroi composite d'épaisseur au moins égale à 1,5 mm, notamment 2 mm.

En outre, la paroi composite dudit au moins un conduit de décharge peut comporter un nombre de plis imprégnés au moins égal à 3, notamment au moins égal à 4.

De façon privilégiée, ledit au moins un conduit de décharge peut notamment comporter une paroi composite drapée d'épaisseur au moins égale à 2 mm et un nombre de plis imprégnés au moins égale à 4.

En outre, ledit au moins un conduit de décharge en matériau composite peut tout particulièrement être réalisé à partir d'une résine thermodurcissable du type bismaléimide, par exemple telle que commercialisée par la société CYTEC sous la référence CYCOM®5250-4, et d'un stratifié de tresses en carbone, notamment biaxiales et/ou triaxiales.

La stratégie d'empilement des plis imprégnés constitutifs de la paroi composite dudit au moins un conduit de décharge influe avantageusement directement sur l'intégrité dudit au moins un conduit de décharge soumis à un risque feu.

De plus, l'invention a également pour objet, selon un autre de ses aspects, un carter intermédiaire pour turboréacteur d'aéronef, caractérisé en ce qu'il comporte un moyeu tel que défini précédemment.

En outre, l'invention a encore pour objet, selon un autre de ses aspects, un turboréacteur d'aéronef, caractérisé en ce qu'il comporte un carter intermédiaire tel que défini précédemment.

Le moyeu de carter intermédiaire, le carter intermédiaire et le turboréacteur d'aéronef selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en oeuvre non limitatif de celle-ci, ainsi qu'à l'examen des figures, schématiques et partielles, du dessin annexé, sur lequel :
- la figure 1 représente, en coupe axiale, un exemple de moyeu d'un carter intermédiaire pour un turboréacteur d'aéronef,
- la figure 2 illustre, en coupe axiale schématique et partielle, le principe de fixation d'un conduit de décharge à la virole externe d'un moyeu de carter intermédiaire de turboréacteur d'aéronef conforme à l'invention, c'est-à-dire la réalisation de l'interface entre le conduit de décharge et la virole externe du moyeu,
- les figures 3 et 4 illustrent respectivement, en coupe axiale schématique et partielle, un principe de réalisation de la paroi amont et de la paroi aval du conduit de décharge illustré sur la figure 2, et
- la figure 5 illustre, selon une vue en perspective partielle, un exemple de variante de réalisation du conduit de décharge du moyeu de carter intermédiaire de turboréacteur d"aéronef conforme à l'invention des figures 2, 3 et 4.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Dans toute la description, il est noté que les termes amont et aval sont à considérer par rapport à une direction principale F d'écoulement normal des gaz (de l'amont vers l'aval) pour un turboréacteur 12. Par ailleurs, on appelle axe T du turboréacteur 12, l'axe de symétrie radiale du turboréacteur 12. La direction axiale du turboréacteur 12 correspond à l'axe de rotation du turboréacteur 12, qui est la direction de l'axe T du turboréacteur 12. Une direction radiale du turboréacteur 12 est une direction perpendiculaire à l'axe T du turboréacteur 12. En outre, sauf précision contraire, les adjectifs et adverbes axial, radial, axialement et radialement sont utilisés en référence aux directions axiale et radiale précitées. De plus, sauf précision contraire, les termes intérieur (ou interne) et extérieur (ou externe) sont utilisés en référence à une direction radiale de sorte que la partie intérieure d'un élément est plus proche de l'axe T du turboréacteur 12 que la partie extérieure du même élément.

La figure 1 a déjà été décrite précédemment dans la partie relative à l'art antérieur et au contexte technique de l'invention.

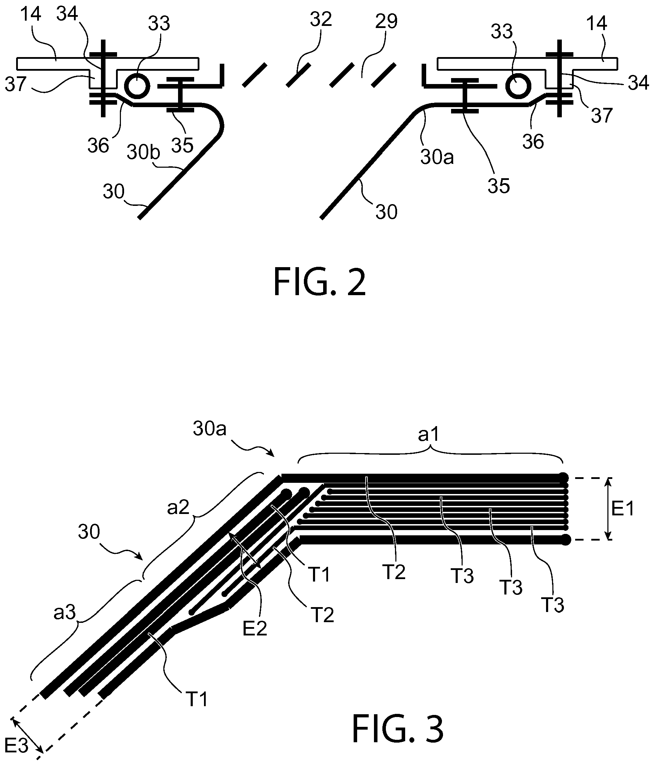

En référence à la figure 2, on a représenté, en coupe axiale schématique et partielle, un principe de fixation d'un conduit de décharge 30 à la virole externe 14 d'un moyeu 10 de carter intermédiaire 11 de turboréacteur d'aéronef 12 selon un exemple de réalisation de l'invention, autrement dit la réalisation de l'interface entre le conduit de décharge 30 et la virole externe 14 du moyeu 10.

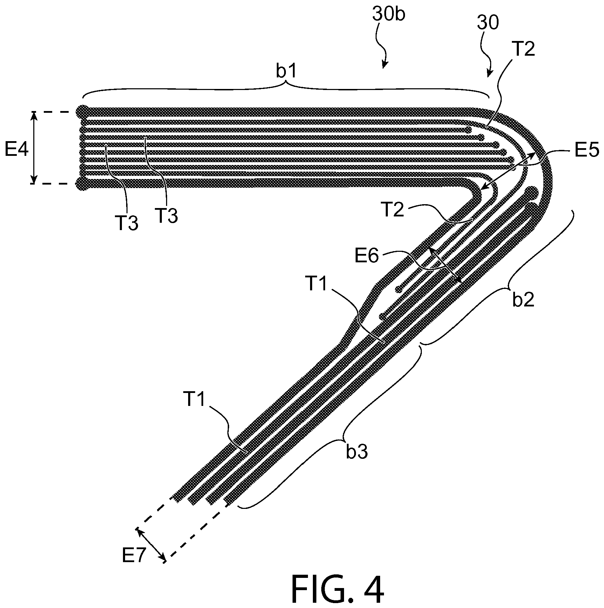

Par ailleurs, les figures 3 et 4 illustrent respectivement, en coupe axiale schématique et partielle, un principe de réalisation de la paroi composite amont 30b et de la paroi composite aval 30a du conduit de décharge 30.

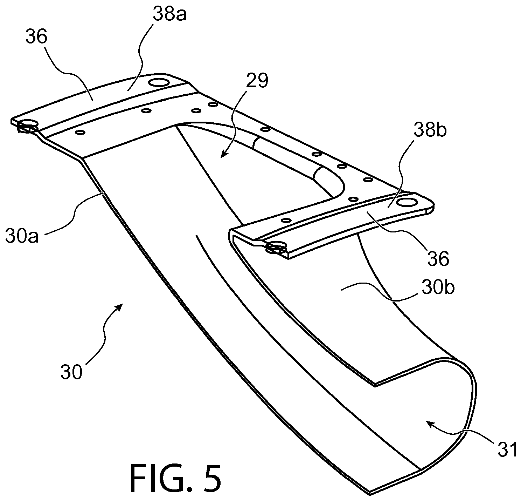

En outre, la figure 5 illustre, selon une vue en perspective partielle, une variante de réalisation du conduit de décharge 30 des figures 2, 3 et 4.

Le moyeu 10 de carter intermédiaire 11 selon l'invention, associé aux figures 2, 3 et 4 décrites ci-après, peut notamment être du même type que celui décrit auparavant en référence à la figure 1. Aussi, pour les parties non représentées sur les figures 2, 3 et 4, il convient de se référer à la description précédente de la figure 1.

Comme décrit ainsi précédemment, le conduit de décharge 30 est situé dans la zone inter veines ZC et relie l'orifice d'entrée de décharge 31 et l'orifice secondaire 29.

Le conduit de décharge 30 est alors apte à prélever, depuis l'orifice d'entrée de décharge 31, de l'air circulant dans l'espace intermédiaire 19 et à renvoyer dans l'espace d'écoulement secondaire 27 l'air ainsi prélevé.

Conformément à l'invention, le conduit de décharge 30 est fixé à la virole annulaire externe 14 au niveau de l'orifice secondaire 29. De plus, un joint d'étanchéité 33 à l'air et au feu est disposé entre le conduit de décharge 30 et la virole annulaire externe 14.

Plus précisément, comme on peut le voir sur la figure 2, la virole externe 14 comporte un bossage annulaire 37 et le conduit de décharge 30 comporte un soyage annulaire 36. La fixation du conduit de décharge 30 à la virole externe 14 est alors réalisée par l'intermédiaire d'un vissage 34 au travers du bossage annulaire 37 et du soyage annulaire 36.

De plus, de façon avantageuse, l'ensemble formé par le bossage annulaire 37 et le soyage annulaire 36 s'étend tout autour du joint d'étanchéité 33, formant une séparation entre le joint d'étanchéité 33 et la zone inter veines ZC.

Par ailleurs, une grille de contrôle 32 est disposé au niveau de l'orifice secondaire 29. Le joint d'étanchéité 33 est alors disposé tout autour de la grille de contrôle 32, laquelle est fixée au conduit de décharge 30 par le biais d'un vissage 35. Ainsi, le joint d'étanchéité 33 est situé entre la grille de contrôle 32 et l'ensemble formé par le bossage annulaire 37 et le soyage annulaire 36.

Le joint d'étanchéité 33 peut par exemple être réalisé, au moins en partie, en silicone. En particulier, il peut comporter une superposition de différents plis de tissus, notamment de verre et/ou de céramique.

En outre, le conduit de décharge 30 est réalisé en matériau composite. Il comporte une paroi composite amont 30b et une paroi composite aval 30a. Conformément à l'invention, les parois amont 30b et aval 30a sont drapées, autrement dit elles sont obtenues par drapage d'une pluralité de plis imprégnés de résine, ces plis comprenant notamment des tresses en carbone, biaxiales ou triaxiales, et la résine étant notamment du type bismaléimide.

L'épaisseur du conduit de décharge 30 et le nombre de plis imprégnés du conduit de décharge 30 peuvent être choisis en fonction du ou des matériaux composites et de l'architecture du conduit de décharge 30.

Comme on peut le voir sur la figure 3, la paroi composite aval 30a du conduit de décharge 30 comporte notamment trois portions successives a1, a2 et a3.

La première portion a1 comporte par exemple deux tresses biaxiales T2 de carbone, de grand diamètre, d'épaisseur égale à environ 0,55 mm, et par exemple au moins six, voire huit, tresses triaxiales T3 de carbone plates d'épaisseur égale à environ 0,25 mm. De cette façon, l'épaisseur E1 de la première portion a1 est d'au moins environ 2,6 mm, voire d'au moins environ 3,1 mm.

De plus, la deuxième portion a2 comporte par exemple deux tresses biaxiales T2 de carbone, de grand diamètre, d'épaisseur égale à environ 0,55 mm, et par exemple deux tresses biaxiales T1 de carbone, de petit diamètre, d'épaisseur égale à environ 0,55 mm. De cette façon, l'épaisseur E2 de la deuxième portion a2 est d'environ 2,7 mm.

En outre, la troisième portion a3 comporte par exemple deux tresses biaxiales T2 de carbone, de grand diamètre, deux tresses biaxiales T1 de carbone, de petit diamètre, d'épaisseur égale à environ 0,55 mm. De cette façon, l'épaisseur E3 de la troisième portion a3 est d'environ 2,2 mm.

Par ailleurs, comme on peut le voir sur la figure 4, la paroi composite amont 30b du conduit de décharge 30 comporte notamment aussi trois portions successives b1, b2 et b3.

La première portion b1 comporte par exemple deux tresses biaxiales T2 de carbone, de grand diamètre, d'épaisseur égale à environ 0,55 mm, et par exemple au moins six, voire huit, tresses triaxiales T3 de carbone plates d'épaisseur égale à environ 0,25 mm. De cette façon, l'épaisseur E4 de la première portion b1 est d'au moins environ 2,6 mm, voire d'au moins environ 3,1 mm, voire d'au moins environ 3,8 mm.

De plus, la deuxième portion b2 comporte par exemple deux tresses biaxiales T2 de carbone, de grand diamètre, d'épaisseur égale à environ 0,55 mm, et par exemple deux tresses biaxiales T1 de carbone, de petit diamètre, d'épaisseur égale à environ 0,55 mm. De cette façon, l'épaisseur E6 de la deuxième portion b2 est d'environ 2,7 mm.

En outre, la troisième portion b3 comporte par exemple deux tresses biaxiales T2 de carbone, de grand diamètre, deux tresses biaxiales T1 de carbone, de petit diamètre, d'épaisseur égale à environ 0,55 mm. De cette façon, l'épaisseur E7 de la troisième portion b3 est d'environ 2,2 mm.

Enfin, l'épaisseur E5 de la paroi composite amont 30b au niveau du coude est par exemple d'environ 1,6 mm.

Par ailleurs, on a illustré en perspective partielle, sur la figure 5, une variante de réalisation du conduit de décharge 30 du moyeu 10 de carter intermédiaire 11 selon l'invention décrit précédemment en référence aux figures 2, 3 et 4.

Dans cet exemple, la virole annulaire externe 14 (non visible sur la figure 5) est dépourvue de bossage annulaire. Alors, le conduit de décharge 30 vient s'accoupler à la virole annulaire externe 14 sans décalage de surface.

Pour ce faire, de façon plus précise, le conduit de décharge 30 comporte un soyage annulaire 36 qui n'est que partiel. Celui-ci s'étend uniquement sur les deux bords opposés amont 38b et aval 38a du conduit de décharge 30.

Alors, la fixation du conduit de décharge 30 à la virole annulaire externe 14 peut par exemple être réalisée par l'intermédiaire du soyage annulaire 36 partiel grâce à un vissage au travers du soyage annulaire 36 partiel permettant de surélever les parois composites 30a, 30b. Le joint d'étanchéité 33, nécessaire pour empêcher les flammes de passer par les côtés du conduit 30, est ainsi logé entre les parois composites 30a, 30b et la virole annulaire externe 14.

Bien entendu, l'invention n'est pas limitée à l'exemple de réalisation qui vient d'être décrit. Diverses modifications peuvent y être apportées par l'homme du métier.

## Revendications

1. Moyeu (10) de carter intermédiaire (11) pour turboréacteur (12) d'aéronef, comportant :
- une virole annulaire interne (13) destinée à délimiter d'une part extérieurement un espace d'écoulement primaire (20) d'un flux de gaz primaire dans le turboréacteur (12), et d'autre part intérieurement l'amont d'au moins une zone inter veines (ZC), la virole annulaire interne (13) étant pourvue d'au moins un orifice primaire de passage d'air (21),
- une virole annulaire externe (14) destinée à délimiter d'une part intérieurement un espace d'écoulement secondaire (27) d'un flux de gaz secondaire (F2) dans le turboréacteur (12), et d'autre part extérieurement ladite au moins une zone inter veines (ZC), la virole annulaire externe (14) étant pourvue d'au moins un orifice secondaire de passage d'air (29),
- au moins une vanne de décharge (23), comprenant au moins une porte mobile (24) apte à prélever, depuis ledit au moins un orifice primaire (21), de l'air circulant dans l'espace d'écoulement primaire (20) et à renvoyer vers ladite au moins une zone inter veines (ZC) l'air ainsi prélevé en direction d'au moins un orifice correspondant d'entrée de décharge (31) d'au moins un conduit de décharge (30) du moyeu (10) de carter intermédiaire (11) conformé pour assurer un passage d'air depuis ledit au moins un orifice d'entrée de décharge (31) vers ledit au moins un orifice secondaire (29) pour renvoyer l'air prélevé via ladite au moins une vanne de décharge (23) dans l'espace d'écoulement secondaire (27),
ledit au moins un conduit de décharge (30) étant fixé à la virole annulaire externe (14) au niveau dudit au moins un orifice secondaire (29), **caractérisé en ce que** au moins un joint d'étanchéité (33) à l'air et au feu est disposé entre ledit au moins un conduit de décharge (30) et la virole annulaire externe (14),
et **en ce que** ledit au moins un conduit de décharge (30) est en matériau composite et comporte une paroi composite (30a, 30b) drapée, constituée d'une pluralité de plis imprégnés de résine.

2. Moyeu de carter intermédiaire selon la revendication 1, **caractérisé en ce qu'**il comporte :
- un flasque transversal aval (16), reliant les viroles annulaires interne (13) et externe (14), délimitant en amont au moins un espace intermédiaire (19) et en aval ladite au moins une zone inter veines (ZC), le flasque transversal aval (16) comprenant ledit au moins un orifice d'entrée de décharge (31), l'air circulant dans l'espace d'écoulement primaire (20), prélevé depuis ledit au moins un orifice primaire (21), par ladite au moins une porte mobile (24) étant apte à être renvoyé dans ledit au moins un espace intermédiaire (19) en direction dudit au moins un orifice d'entrée de décharge (31), ladite au moins une vanne de décharge (23) comprenant ledit au moins un conduit de décharge (30), situé dans ladite au moins une zone inter veines (ZC) et reliant ledit au moins un orifice d'entrée de décharge (31) et ledit au moins un orifice secondaire (29), l'air prélevé pouvant circuler dans ledit au moins un espace intermédiaire (19) et être renvoyé dans l'espace d'écoulement secondaire (27).

3. Moyeu de carter intermédiaire selon la revendication 1 ou 2, **caractérisé en ce que** ledit au moins un joint d'étanchéité (33) à l'air et au feu est réalisé, au moins en partie, en silicone.

4. Moyeu de carter intermédiaire selon l'une des revendications précédentes, **caractérisé en ce que** la virole annulaire externe (14) comporte un bossage annulaire (37) et **en ce que** ledit au moins un conduit de décharge (30) comporte un soyage annulaire (36), la fixation dudit au moins un conduit de décharge (30) à la virole annulaire externe (14) étant réalisée par l'intermédiaire du bossage annulaire (37) et du soyage annulaire (36), notamment par le biais d'un vissage (34) au travers du bossage annulaire (37) et du soyage annulaire (36).

5. Moyeu de carter intermédiaire selon la revendication 4, **caractérisé en ce que** l'ensemble formé par le bossage annulaire (37) et le soyage annulaire (36) s'étend tout autour dudit au moins un joint d'étanchéité (33) à l'air et au feu, formant une séparation entre ledit au moins un joint d'étanchéité (33) et ladite au moins une zone inter veines (ZC).

6. Moyeu de carter intermédiaire selon l'une des revendications 1 à 3, **caractérisé en ce que** ledit au moins un conduit de décharge (30) comporte un soyage annulaire (36) partiel, s'étendant sur au moins deux bords opposés (38a, 38b) dudit au moins un conduit de décharge (30), la fixation dudit au moins un conduit de décharge (30) à la virole annulaire externe (14) étant réalisée par l'intermédiaire du soyage annulaire (36) partiel, notamment par le biais d'un vissage au travers du soyage annulaire (36) partiel permettant de surélever ladite paroi composite (30a, 30b), ledit au moins un joint d'étanchéité (33) étant logé entre ladite paroi composite (30a, 30b) et la virole annulaire externe (14).

7. Moyeu de carter intermédiaire selon la revendication 6, **caractérisé en ce que** la virole annulaire externe (14) est dépourvue de bossage annulaire.

8. Moyeu de carter intermédiaire selon l'une quelconque des revendications précédentes, **caractérisé en ce qu'**une grille de contrôle (32) est disposée au niveau dudit au moins un orifice secondaire (29), ledit au moins un joint d'étanchéité (33) à l'air et au feu étant disposé tout autour de la grille de contrôle (32), la grille de contrôle (32) étant fixée audit au moins un conduit de décharge (30), notamment par le biais d'un vissage (35).

9. Moyeu de carter intermédiaire selon la revendication 4 ou 5 et selon la revendication 8, **caractérisé en ce que** ledit au moins un joint d'étanchéité (33) à l'air et au feu est situé entre la grille de contrôle (32) et l'ensemble formé par le bossage annulaire (37) et le soyage annulaire (36).

10. Moyeu de carter intermédiaire selon l'une quelconque des revendications précédentes, **caractérisé en ce que** ledit au moins un conduit de décharge (30) comporte une paroi composite (30a, 30b) d'épaisseur (E1-E7) au moins égale à 1,5 mm, notamment 2 mm.

11. Moyeu de carter intermédiaire selon l'une quelconque des revendications précédentes, **caractérisé en ce que** la paroi composite (30a, 30b) dudit au moins un conduit de décharge (30) comporte un nombre de plis imprégnés au moins égal à 3, notamment au moins égal à 4.

12. Carter intermédiaire (11) pour turboréacteur d'aéronef (12), **caractérisé en ce qu'**il comporte un moyeu (10) selon l'une quelconque des revendications précédentes.

13. Turboréacteur d'aéronef (12), **caractérisé en ce qu'**il comporte un carter intermédiaire (11) selon la revendication 12.

## Patentansprüche

1. Nabe (10) für ein Zwischengehäuse (11) für ein Turbinenstrahltriebwerk (12) für einen Flugkörper, umfassend:
- eine innere ringförmige Hülse (13), die dazu vorgesehen ist, einerseits extern einen primären Strömungsraum (20) eines primären Gasstroms in dem Turbinenstrahltriebwerk (12) und andererseits intern den vorgelagerten Bereich mindestens einer Zwischenstromzone (ZC) zu begrenzen, wobei die innere ringförmige Hülse (13) mit mindestens einer primären Luftdurchtrittsöffnung (21) versehen ist,
- eine äußere ringförmige Hülse (14), die dazu vorgesehen ist, einerseits intern einen sekundären Strömungsraum (27) eines sekundären Gasstroms (F2) in dem Turbinenstrahltriebwerk (12) und andererseits extern die mindestens eine Zwischenstromzone (ZC) zu begrenzen, wobei die äußere ringförmige Hülse (14) mit mindestens einer sekundären Luftdurchtrittsöffnung (29) versehen ist,
- mindestens ein Ablassventil (23), das mindestens eine bewegliche Tür (24) umfasst, die in der Lage ist, von dieser mindestens einen primären Öffnung (21), die im primären Strömungsraum (20) zirkulierende Luft abzuziehen und die so abgesaugte Luft in die mindestens eine Zwischenstromzone (ZC) in Richtung mindestens einer zugehörigen Auslassöffnung (31) mindestens eines Auslasskanals (30) der Nabe (10) für ein Zwischengehäuse (11) zurückzuleiten, der geeignet ist, um einen Luftdurchgang von dieser mindestens einen Auslassöffnung (31) zu dieser mindestens einen sekundären Öffnung (29) bereitzustellen, um die durch das mindestens eine Auslassventil (23) angesaugte Luft in den sekundären Strömungsraum (27) zurückzuleiten,
wobei dieser mindestens eine Auslasskanal (30) an der äußeren ringförmigen Hülse (14) auf Höhe der mindestens einen sekundären Öffnung (29) befestigt ist,
**dadurch gekennzeichnet, dass**
mindestens eine
Luft- und Brandschutzdichtung (33) zwischen dem mindestens einen Auslasskanal (30) und der äußeren ringförmigen Hülse (14) angeordnet ist,
und dass dieser mindestens eine Auslasskanal (30) aus Verbundmaterial besteht und eine Verbundwand (30a, 30b) aus einer Vielzahl von harzimprägnierten Falten aufweist.

2. Nabe für ein Zwischengehäuse nach Anspruch 1, **dadurch gekennzeichnet, dass** sie Folgendes umfasst:
- einen nachgelagerten Querflansch (16), der die innere (13) und äußere (14) ringförmige Hülse verbindet, der vorgelagert mindestens einen Zwischenraum (19) und nachgelagert die mindestens eine Zwischenstromzone (ZC) begrenzt, wobei der nachgelagerte Querflansch (16) die mindestens eine Auslassöffnung (31) umfasst, wobei die Luft, die im primären Strömungsraum (20) zirkuliert und durch die mindestens eine primäre Öffnung abgesaugt wird (21), durch die mindestens eine bewegliche Tür (24) in den mindestens einen Zwischenraum (19) in Richtung der mindestens einen Auslassöffnung (31) zurückgeleitet werden kann, wobei das mindestens eine Ablassventil (23) den mindestens einen Auslasskanal (30) umfasst, der in der Zwischenstromzone (ZC) angeordnet ist und die mindestens eine Auslassöffnung (31) und die mindestens eine sekundäre Öffnung (29) verbindet, wobei die abgesaugte Luft in dem mindestens einen Zwischenraum (19) zirkulieren und in den sekundären Strömungsraum (27) zurückgeleitet werden kann.

3. Nabe für ein Zwischengehäuse nach Anspruch 1 oder 2, **dadurch gekennzeichnet, dass** die Luft- und Brandschutzdichtung (33) zumindest teilweise aus Silikon besteht.

4. Nabe für ein Zwischengehäuse nach einem der vorhergehenden Ansprüche, **dadurch gekennzeichnet, dass** die äußere ringförmige Hülse (14) einen ringförmigen Dorn (37) aufweist und dass der mindestens eine Auslasskanal (30) ein ringförmiges Gewindeloch (36) aufweist, wobei die Befestigung des mindestens einen Auslasskanals (30) an der äußeren ringförmigen Hülse (14) mittels des ringförmigen Dorns (37) und des ringförmigen Gewindelochs (36), insbesondere mittels einer Schraubverbindung (34) durch den ringförmigen Dorn (37) und das ringförmige Gewindeloch (36), erfolgt.

5. Nabe für ein Zwischengehäuse nach Anspruch 4, **dadurch gekennzeichnet, dass** sich die durch den ringförmigen Dorn (37) und das ringförmige Gewindeloch (36) gebildete Anordnung um die mindestens eine Luft- und Brandschutzdichtung (33) herum erstreckt und eine Trennung zwischen dieser mindestens einen Dichtung (33) und der mindestens einen Zwischenstromzone (ZC) bildet.

6. Nabe für ein Zwischengehäuse nach einem der Ansprüche 1 bis 3, **dadurch gekennzeichnet, dass** der mindestens eine Auslasskanal (30) ein teilweises ringförmiges Gewindeloch (36) aufweist, das sich über mindestens zwei gegenüberliegende Enden (38a, 38b) des mindestens einen Auslasskanals (30) erstreckt, wobei die Befestigung des mindestens einen Auslasskanals (30) an der äußeren ringförmigen Hülse (14) mittels des teilweisen ringförmigen Gewindelochs (36) erfolgt, insbesondere mittels einer Schraubverbindung durch das teilweise ringförmige Gewindeloch (36), die es ermöglicht, die Verbundwand (30a, 30b) anzuheben, wobei die mindestens eine Dichtung (33) zwischen der Verbundwand (30a, 30b) und der äußeren ringförmigen Hülse (14) angebracht ist.

7. Nabe für ein Zwischengehäuse nach Anspruch 6, **dadurch gekennzeichnet, dass** die äußere ringförmige Hülse (14) kein ringförmiges Gewindeloch aufweist.

8. Nabe für ein Zwischengehäuse nach einem der vorstehenden Ansprüche, **dadurch gekennzeichnet, dass** an der mindestens einen sekundären Öffnung (29) ein Steuergitter (32) angeordnet ist, wobei die mindestens eine Luft- und Brandschutzdichtung (33) rund um das Steuergitter (32) angeordnet ist, wobei das Steuergitter (32) an dem mindestens einen Auslasskanal (30) befestigt ist, und zwar mittels einer Schraubverbindung (35).

9. Nabe für ein Zwischengehäuse nach Anspruch 4 oder 5 und nach Anspruch 8, **dadurch gekennzeichnet, dass** die mindestens eine Luft- und Brandschutzdichtung (33) zwischen dem Steuergitter (32) und der Anordnung aus ringförmigem Dorn (37) und ringförmigem Gewindeloch (36) angeordnet ist.

10. Nabe für ein Zwischengehäuse nach einem der vorstehenden Ansprüche, **dadurch gekennzeichnet, dass** der mindestens eine Auslasskanal (30) eine Verbundwand (30a, 30b) mit einer Dicke (E1-E7) von mindestens 1,5 mm, bzw. 2 mm, aufweist.

11. Nabe für ein Zwischengehäuse nach einem der vorstehenden Ansprüche, **dadurch gekennzeichnet, dass** die Verbundwand (30a, 30b) des mindestens einen Auslasskanals (30) mindestens 3, bzw. mindestens 4, imprägnierte Falten aufweist.

12. Zwischengehäuse (11) für ein Turbinenstrahltriebwerk für einen Flugkörper (12), **dadurch gekennzeichnet, dass** es eine Nabe (10) nach einem der vorstehenden Ansprüche umfasst.

13. Turbinenstrahltriebwerk für einen Flugkörper (12), **dadurch gekennzeichnet, dass** es ein Zwischengehäuse (11) nach Anspruch 12 aufweist.

## Claims

1. Hub (10) of intermediate casing (11) for aircraft turbojet engine (12), comprising:
- an inner annular shroud (13) that will firstly delimit the exterior of a core engine flow space (20) of a core engine gas flow in the turbojet engine (12), and secondly on the interior, the upstream part at least one inter-flow area (ZC), the inner annular shroud (13) being provided with at least one primary air passage orifice (21),
- an outer annular shroud (14) that will firstly delimit the interior of a fan flow space (27) of a fan gas flow (F2) in the turbojet engine (12), and secondly the exterior of said at least one inter-flow area (ZC), the outer annular shroud (14) being provided with at least one secondary air passage orifice (29),
- at least one variable bleed valve (23), comprising at least one mobile gate (24) capable of drawing off air circulating in the core engine flow space (20) through said at least one primary orifice (21) and sending air thus drawn off to said at least one inter-flow area (ZC) towards at least one corresponding discharge inlet orifice (31) of at least one outlet pipe (30) of the hub (10) of the intermediate case (11) shaped to allow an air passage from said at least one discharge inlet orifice (31) to said at least one secondary orifice (29) to send air drawn off through said at last one variable bleed valve (23) into the fan flow space (27),
said at least one outlet pipe (30) being fixed to the outer annular shroud (14) at said at least one secondary orifice (29),
**characterised in that** at least one gasket (33) for sealing against air and fire is installed between said at least one outlet pipe (30) and the outer annular shroud (14),
and **in that** said at least one outlet pipe (30) is made of a composite material and comprises a draped composite wall (30a, 30b) composed of a plurality of plies impregnated with resin.

2. Intermediate casing hub according to claim 1, **characterised in that** it comprises the following:
- a downstream cross-plate (16) connecting the inner annular shroud (13) and the outer annular shroud (14), delimiting at least one intermediate space (19) on the upstream side and at least one inter-flow space (ZC) on the downstream side, the downstream cross-plate (16) comprising said at least one discharge inlet orifice (31), air circulating in the core engine flow space (20) drawn off from said at least one primary orifice (21), through said at least one mobile gate (24) possibly being sent in said at least one intermediate space (19) towards said at least one discharge inlet orifice (31), said at least one variable bleed valve (23) comprising said at least one outlet pipe (30), located in said at least one inter-flow area (ZC) and connecting said at least one discharge inlet orifice (31) and said at least one secondary orifice (29), the air drawn off possibly circulating in said at least one intermediate space (19) and being sent to the fan flow space (27).

3. Intermediate casing hub according to claim 1 or 2, **characterised in that** said at least one gasket (33) for sealing against air and fire is at least partly made from silicone.

4. Intermediate casing hub according to one of the above claims, **characterised in that** the outer annular shroud (14) comprises an annular boss (37) and **in that** said at least one outlet pipe (30) comprises an annular joggle (36), the attachment of said at least one outlet pipe (30) to the outer annular shroud (14) being made through the annular boss (37) and the annular joggle (36), particularly by screwing (34) through the annular boss (37) and the annular joggle (36).

5. Intermediate casing hub according to claim 4, **characterised in that** the assembly composed of the annular boss (37) and the annular joggle (36) extends entirely around said at least one gasket (33) for sealing against air and fire, forming a separation between said at least one gasket (33) and said at least one inter-flow area (ZC).

6. Intermediate casing hub according to one of claims 1 to 3, **characterised in that** said at least one outlet pipe (30) comprises a partial annular joggle (36) extending along at least two opposite edges (38a, 38b) of said at least one outlet pipe (30), the attachment of said at least one outlet pipe (30) to the outer annular shroud (14) being made through the partial annular joggle (36), particularly by screwing through the partial annular joggle (36) to raise said composite wall (30a, 30b), said at least one gasket (33) being housed between said composite wall (30a, 30b) and the outer annular shroud (14).

7. Intermediate casing hub according to claim 6, **characterised in that** the outer annular shroud (14) does not have an annular boss.

8. Intermediate casing hub according to any one of the above claims, **characterised in that** there is a control gate (32) at said at least one secondary orifice (29), said at least one gasket (33) for sealing against air and fire being placed all around the control gate (32), the control gate being fixed to at least one outlet pipe (30), particularly by screwing (35).

9. Intermediate casing hub according to claim 4 or 5 and according to claim 8, **characterised in that** said at least one gasket (33) for sealing against air and fire is located between the control gate (32) and the assembly formed by the annular boss (37) and the annular joggle (36).

10. Intermediate casing hub according to any one of the above claims, **characterised in that** said at least one outlet pipe (30) comprises a composite wall (30a, 30b) with thickness (E1-E7) equal to at least 1.5 mm, and particularly 2 mm.

11. Intermediate casing hub according to any one of the above claims, **characterised in that** the composite wall (30a, 30b) of said at least one outlet pipe (30) comprises at least 3 impregnated plies, and particularly at least 4.

12. Intermediate casing (11) for aircraft turbojet engine (12), **characterised in that** it comprises a hub (10) according to any one of the above claims.

13. Aircraft turbojet engine (12), **characterised in that** it comprises an intermediate casing (11) according to claim 12.
